# EUROPEAN PATENT SPECIFICATION

(11) **EP 2 176 044 B1**
(45) Date of publication and mention of the grant of the patent: **16.03.2016**
(21) Application number: 08776363.7
(22) Date of filing: 15.07.2008
(51) Int. Cl.: B27B 31/00, B65G 59/02, B65H 3/50

(54) **APPARATUS FOR FORMING STACKS OF PANELS TO BE FED TO A USER STATION**
VORRICHTUNG ZUR BILDUNG VON STAPELN VON PLATTEN, DIE EINER BENUTZERSTATION ZUGEFÜHRT WERDEN SOLLEN
APPAREIL POUR FORME DES EMPILEMENTS DE PANNEAUX DESTINÉS À ÊTRE DÉLIVRÉS À UN POSTE D'UTILISATEUR

(30) Priority: 30.07.2007 IT BO20070540
(43) Date of publication of application: 21.04.2010
(73) Proprietor: GIBEN INTERNATIONAL S.p.A., 40065 Pianoro (Bologna) (IT)
(72) Inventor: BENUZZI, Piergiorgio, I-40141 Bologna (IT)
(74) Representative: Puggioli, Tommaso
(86) International application number: PCT/IB2008/001862
(87) International publication number: WO 2009/016447

(56) References cited:
- EP-A- 0 451 592
- EP-A- 1 484 270
- EP-A- 1 505 017
- EP-A- 1 873 095
- WO-A-2007/113673
- DE-A1- 4 242 270

## Description

### Technical Field

This invention relates to an apparatus for forming and moving stacks of panels according to the preambles of claims 1 and 8, such as, for example, veneering or sheets of wood or like material, including composites, and in particular, panels whose thickness is relatively small compared to the surface area.

Such an apparatus is known from EP1484270 A2.

### Background Art

Current panel sawing processes by which large panels are cut into smaller sub-panels used, for example, in the furniture industry, involve the use of apparatuses which, starting from a vertical pile of panels or sheets positioned on an elevator table:
- select (by separation) a certain number of panels from the top of the pile;
- transfer the stacks selected one after another at regular intervals to a sawing station.

In a first known example an apparatus of this kind made by the same Applicant as this invention, panel selection is achieved by the combined operation of a stop element that references the top of the pile and a panel selection element, consisting of a pushing surface or shoulder extending vertically (that is to say, parallel with the extension of the pile). Both these elements are mounted on a crossbar that moves to and fro above the pile of panels in a direction parallel to itself between a position in which it receives the pile of panels and a position in which it feeds the panels to the sawing station.

The selection element operates in a development plane below the reference stop at the top of the pile at a distance corresponding to the desired / selected thickness of the stack of panels.

A side wall abuts against one side (end) of the pile at the face opposite the face of it nearest the selection element. Opposing the reaction exerted by the side wall, the selection element is actuated in such a way as to push a certain number of panels belonging to the pile (the number equivalent to the stack to be fed and also defined by the height of the pushing surface) below which there remain the rest of the panels of the pile which will form the subsequent stacks.

Thus, the panel selection element is equipped with a shoulder forming an opposing and pushing element designed to allow the selected stack to be fed towards a receiving zone or the user station when the crossbar begins moving forward.

The crossbar is then moved horizontally in such a way as to carry the stack of panels thus selected towards the sawing station.

Said type of apparatus has proved highly satisfactory when working with relatively thick panels, that is to say, panels whose flexural rigidity is sufficiently high to allow the panels to slide, skimming over the panels below substantially lying flat and without unwanted movements.

When the panels to be selected and moved are thin, that is to say, when the surface area of the panels is very large compared to their thickness, the apparatus described above is modified and includes a wedge-shaped element forming the panel selection element which, thanks to its penetration in the pile and, helped by a simultaneous lowering of the pile performed by moving the elevator table, forms the stack by means of a gap separating it from the rest of the pile below.

Again, the wedge-shaped panel selection element is equipped with a shoulder designed to form an opposing and pushing element, allowing the selected stack to be fed towards a receiving zone when the crossbar moves.

However, said type of system may have several disadvantages: once the wedge-shaped element has selected the panels which will form the stack and lifted them off the rest of the pile, the parts of the panel at the sides of the selection element may bend under their own weight on account of their flexibility and be fed unevenly.

When the crossbar starts moving, the panel (or panels) tends to move out of alignment with respect to the rest of the stack, causing moving parts to jam. When this happens, the apparatus has to be brought to an immediate stop and the panels or, even worse, the apparatus itself, may be seriously damaged.

To solve this problem, the Applicant invented and made an apparatus (see Italian patent application IT 2006BO00238) in which there are, again mounted on a movable crossbar, the stop element that references the top of the pile and a first wedge-shaped element which moves transversally to the pile according to the direction of panel feed, in such a way as to separate a certain number of panels from the top of the pile, thus forming a gap around the first wedge-shaped element by means of a relative movement of the pile in a vertical direction.

A second selection element (preferably wedge-shaped) is added to these elements, also being mounted on the crossbar, and able to move, respectively, in the direction of feed and relative to the crossbar along a first horizontal direction, longitudinally to the crossbar itself, allowing it to be inserted in the pile next to the first wedge-shaped element and at the gap, thus completely separating the pile at a point which is distanced from the first wedge-shaped element by sliding along the first horizontal direction. At this point the two wedge-shaped elements still form the elements for pushing the selected stack.

Said solution significantly reduced the error in the number of panels to be picked up, also increasing the certainty of feeding the panels in a straight line towards the sawing station.

However, after various studies and tests it was noticed that selecting a large number of panels, together with their flexibility, may produce a further disadvantage which is the possibility of accidentally dragging along with the selected stack the first, or the first few panels in the pile which are located immediately below the gap produced by the two wedge-shaped selection elements.

Thus, if the panels are very flexible, when the crossbar starts moving towards the sawing station, a large surface area of the stack scrapes on the top of the pile which is below the gap.

Said stack scraping increases until it reaches its maximum at the part of the stack surface furthest from the selection elements and which rests on the pile.

If the stack contains a large number of panels, that is to say, if it is very heavy, the weight of the stack bears down on the rest of the panels in the pile below and the resulting friction between the bottom of the stack being moved and the panel at the top of the remaining pile may be strong enough to drag the top panel or panels and move them out of alignment relative to the rest of the pile.

In this case, too, the apparatus has to be stopped, the damaged panels removed and normal operation resumed, with all the obvious disadvantages that this involves, especially when the apparatus forms part of a more complex production line.

An example of known apparatus for manage very thin panels is disclosed in document EP1484270 which refers to a procedure for the destacking of a defined number of sheets in a ream entailing gripping of a residual ream as a complete ream by a gripper.

### Disclosure of the Invention

The aim of this invention is, therefore, to overcome the above-mentioned disadvantages by providing an apparatus capable of guaranteeing regular operation with panels of different rigidity, that is to say, even when working with highly flexible panels and panels that are selected together in stacks containing large numbers of them, making apparatus operation guaranteed and flexible.

The apparatus according to the invention is defined by the features of the appended claims 1 and 8,

Further preferred embodiments are defined by the features of dependent claims 2-7 and 9.

### Brief Description of the Drawings

The technical features and advantages of the solution proposed by this invention are more apparent from the detailed description which follows, with reference to the accompanying drawings which illustrate preferred embodiments of the invention provided merely by way of example without restricting the scope of the invention as defined by the claims, and in which:
Figure 1 is a schematic top plan view of an apparatus for forming and moving stacks of panels in accordance with the invention;
Figure 2 is a side view with some parts cut away to better illustrate others, of a detail P of the apparatus of Figure 1;
Figure 3 is a front view of the detail of Figure 2;
Figure 4 is a side view with some parts cut away to better illustrate others, of a detail P1 of the apparatus of Figure 1;
Figures 5 and 6 are sides views of a part of the apparatus, in particular presser elements relating to Figure 4, in two different operating conditions.

### Detailed Description of the Preferred Embodiments of the Invention

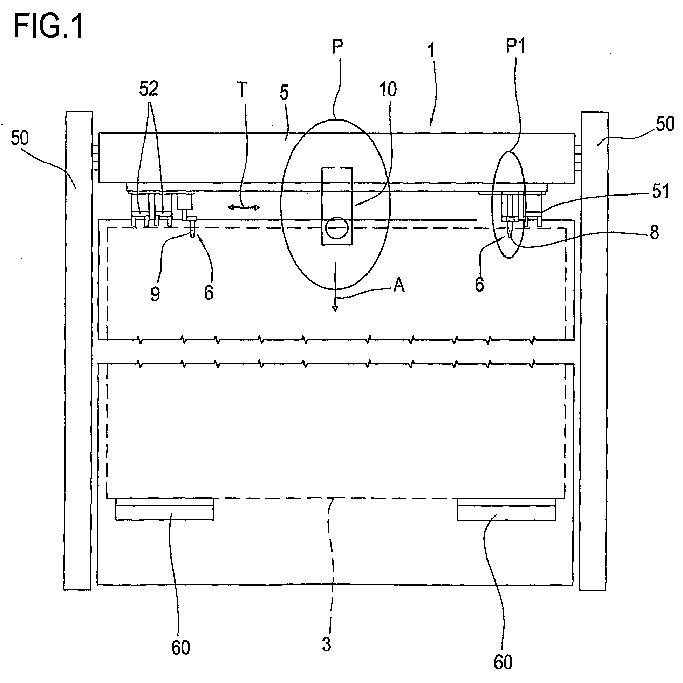

With reference to Figure 1, the numeral 1 denotes in its entirety an apparatus for forming stacks 2 of panels 3 from a vertical pile 4 of panels 3 and feeding the stacks 2 to a user station.

The term panels 3 is used generically to indicate panels in the strict sense such as, for example, solid panels made of wood of various kinds and in various thicknesses but also to indicate layered veneering of composite materials such as sheets of plywood and/or like materials used for example in the furniture industry.

However they are made, the panels 3 are preferably thin but very large in surface area. They are therefore highly flexible and elastically deformable even under their own weight only.

The user station is not shown in the drawings, since it is irrelevant to this invention.

It might, for example, be a conventional sawing station in which the large panels 3 are cut into smaller panels according to specific application needs.

As shown in Figure 1, the apparatus 1 comprises a horizontal crossbar 5, supported at opposite ends by a pair of parallel longitudinal members 50 and actuated by respective drive means (not illustrated).

The longitudinal members 50 are parallel with a horizontal feed direction A along which the panels 3 are fed towards the user station.

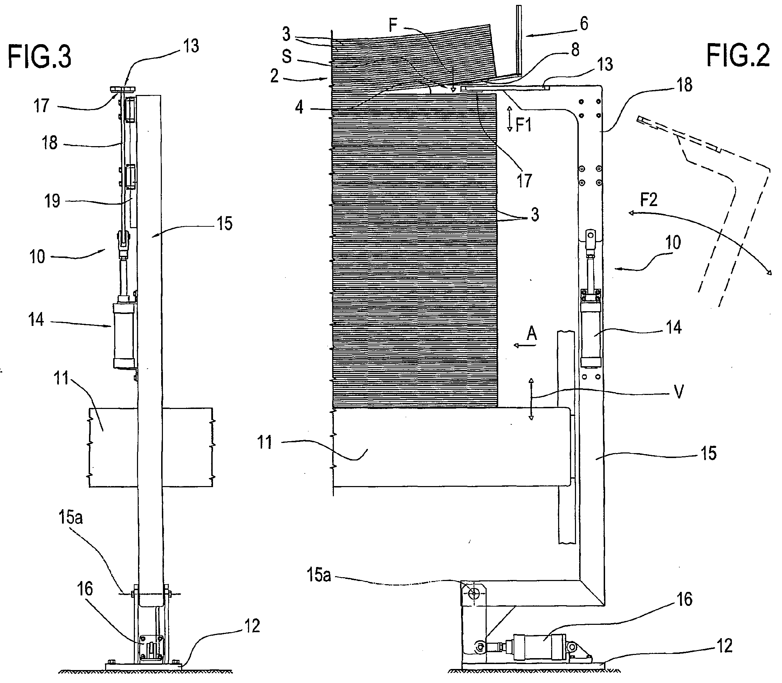

The crossbar 5 is mobile in a direction, above the pile 4 of panels 3, to and fro at least - in this embodiment - between two limits corresponding to: a position where it receives the pile 4 of panels 3, above an elevator table 11 which extends horizontally (also illustrated in Figure 2) and a position where it places the stack 2 in the user station.

The movement of the crossbar 5 refers only to the selection position since the crossbar 5 may continue into the user station to move the selected stack 2 while it is processed.

The apparatus 1 comprises a selector unit, labelled 6 as a whole, designed to form on the top of the pile 4 supported by the elevator table 11 stacks 2 of panels 3 to be transferred to the user station.

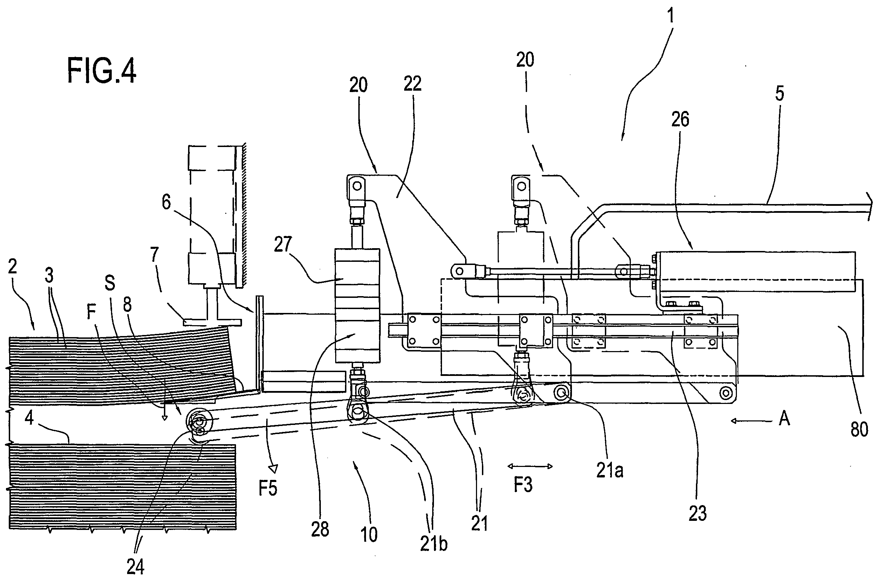

The selector unit 6 is mounted on the crossbar 5 and, more specifically, it comprises at least one reference stop 7 for the top of the pile 4 (shown with a dashed line in Figure 4) and a first wedge-shaped rod-like element 8 driven transversally to the pile 4 in the feed direction A in such a way as to separate from the pile 4 a certain number of panels 3 at the top to form the stack 2.

It should nevertheless be stressed that the separating action of the first wedge-shaped element 8 is followed by a coordinated downward movement of the elevator table 11 (in a vertical direction V relative to a fixed plane 12) so as to create a gap S around the first wedge-shaped element 8. This possibility of coordinated movement also makes it easier for all the panels 3 in the stack 2 to be uniformly selected.

The numeral 60 in Figure 1 denotes further reference stops located in the proximity of the side of the pile 4 of panels 3 opposite the panel 3 selection side (that is to say, the side nearest the user station).

These reference stops 60, usually comprise one or more blocks acting the outer edge of the selectable panels 3 at the top of the pile 4 when the first wedge-shaped element 8 is inserted into the pile 4.

This is possible by adjusting the reference blocks 60 in height to stop the panels 3, preferably against one of their vertical sides, in order to prevent unwanted movement of the panels 3 penetrated by the first wedge-shaped element 8.

The apparatus 1 may also comprise first and second means, labelled respectively 51 and 52 as a whole, for gripping the panels 3, said means not described herein since they are not strictly part of the invention.

A second wedge-shaped element 9, similar to the first element 8 and forming another part of the selector unit 6 may be connected to one of these gripping means (normally grippers).

However, said second element 9 may move either in the direction of feed A, or relative to the crossbar 5 along a first horizontal direction T, longitudinally to the crossbar 5 itself (this solution and its construction details are described in detail in Italian patent application IT 2006BO00238 by the same Applicant and, therefore, they are only briefly referred to herein).

The apparatus also comprises presser elements 10, which can be inserted between the top of the pile 4 and the selected stack 2, and which act on the top of the pile 4 after the gap S has been formed. In this way, the presser elements 10 generate a compression force F on the pile 4 to hold the panels 3 at the top of the pile 4 when the stacks 2 are fed by the crossbar 5.

In a first, non-limiting construction solution, illustrated in Figures 2 and 3, the presser elements 10 may be connected to the fixed surface 12, being close to the end of the pile 4 furthest from the user station, relative to the direction of feed A, and below the crossbar 5 and the selector unit 6.

More precisely, these presser elements 10 may comprise a compression plate 13 connected to first movement means 14, said means being positioned along a supporting column 15 and designed to allow the plate 13 to move between two limit positions, respectively, lower, operating in which it makes contact with and presses the top of the pile 4, and raised, non-operating in which the plate 13 is spaced from the top of the pile 4 (see arrows F1 in Figure 2).

Obviously, it must be possible to insert this plate 13 only after the gap S has been formed. For this purpose, according to the invention, the column 15 pivots, at its lower end, at the fixed surface 12 and is controlled by second movement means 16 (a cylinder) designed to allow rotation of the column 15 between a lowered non-operating position, in which the column 15 is spaced from the pile 4 (dashed line in Figure 2), and a raised operating position, in which the column 15 is positioned parallel with the pile 4 and the plate 13 is inserted between the top of the pile 4 and the selector unit 6 (see arrow F2 in Figure 2).

In terms of construction, the plate 13 may comprise an operating contact head 17 positioned transversally to the column 15, and a support 18, parallel with the column 15, and slidably connected to respective column 15 guides 19.

The lower end of the support 18 is connected to the rod of a movement cylinder 14, integral with the column 15, and forming the above-mentioned first movement means.

Figures 4 to 6 show a construction according to the invention more dedicated to the above-mentioned structure of the selector unit 6 comprising the two wedge-shaped elements 8 and 9.

In this specific case, according to the invention the presser elements 10 is connected to the crossbar 5 and move, independently of the crossbar 5, at least parallel with the two wedge-shaped elements 8 and 9 along the direction of feed A.

Obviously, the presser elements 10 may belong to a single unit, two units, together with the wedge-shaped elements 8 and 9 or there may be a greater number of them, depending on apparatus operating requirements, without thereby limiting the solution in accordance with the invention as defined by the claims.

As shown in Figures 4 to 6, each presser element 10 comprises at least one set of equipment 20 connected to the crossbar 5 and positioned parallel next to the first and/or second wedge-shaped element 8 and 9.

Each set of equipment 20 comprises:
- an arm 21 pivoting, at 21 a and at a first, distal end, at a supporting plate 22 slidably connected to a guide 23 which is integral with the crossbar 5. At the distal end, the arm 21 has a head 24 for making contact with and pressing the top of the pile 4;
- a movement unit 25 acting on the supporting plate 22 and on the arm 21 in such a way as to allow the contact head 24 to be inserted between the first and/or second wedge-shaped element 8 and 9 and the top of the pile 4 in coordination with creation of the gap S between a stack 2 of panels 3 and the rest of the pile 4.

As Figures 4 to 6 clearly show, the contact head consists of an idle cylindrical roller 24 connected to the proximal end of the arm 21 in such a way as to allow constant pressure to be applied to the top of the pile 4 during the stack 2 feed stroke towards the user station.

Obviously, each set of equipment 20 present may be connected to the respective set of equipment 80 for supporting and moving each wedge-shaped element 8 and/or 9.

If connected to the second wedge-shaped element 9, the respective set of equipment 20 may also move transversally relative to the crossbar 5 during its positioning step.

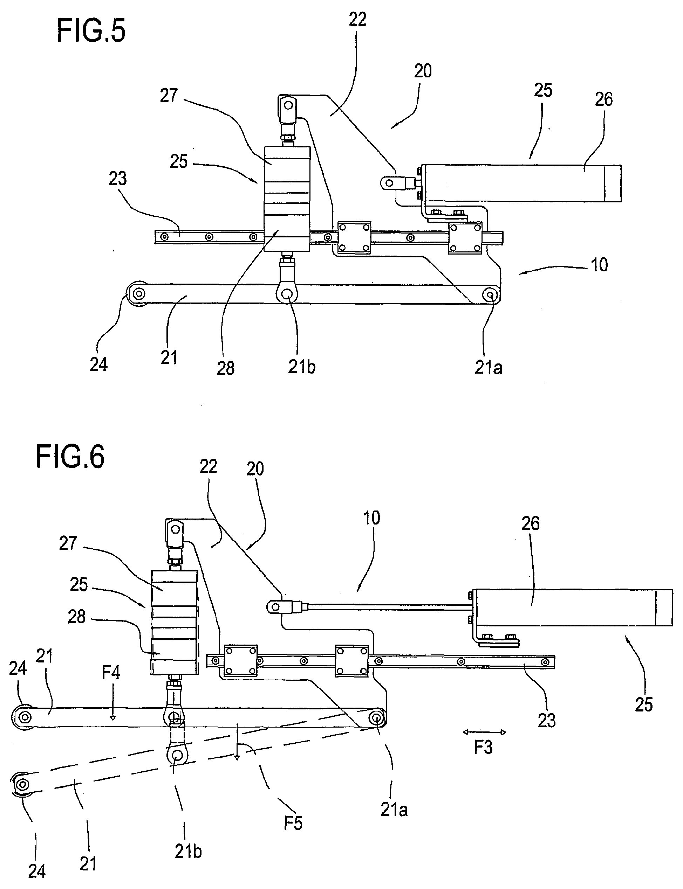

The above-mentioned movement unit 25 comprises third movement means 26 inserted between the crossbar 5 and the supporting plate 22 and designed to allow a movement (in both directions), according to the direction of feed A, by the supporting plate 22 between a back, non-operating position (Figure 5), and a forward, operating position (Figures 4 and 6 and arrows F3) in which it is inserted between the first and/or second wedge-shaped element 8, 9 and the top of the pile 4, and in which the arm 21 is parallel with the first and/or second wedge-shaped element 8, 9.

The movement unit 25 also comprises fourth movement means 27, 28 inserted between the supporting plate 22 and an intermediate point 21b of the arm 21, being designed to allow, respectively:
- a first movement towards the top of the pile 4, when the supporting plate 22 is in the forward, operating position (arrow F4 in Figures 4 and 5), and
- a second movement for contact between the head 24 and the top of the pile 4 so as to press on the top of the pile 4 (arrow F5).

To allow these two movements, the fourth movement means comprise two opposite cylinders 27 and 28, positioned vertically, and connected with the respective rod, respectively, to the supporting plate 22 and to the arm 21 so as to control the arm 21, first in the approach position and then in the contact position pressing on the top of the pile 4, and vice versa.

In practice, activation of the presser elements 10 begins, after the gap S has been formed, but, whilst for the first case illustrated there is a vertical rotation of the column 15 to allow insertion of the plate 13 which then presses the top of the pile 4 until feeding of the selected stack 2 is complete, in the second case illustrated the operating movements are different.

After the gap S has been formed, the arm 21 of each set of equipment 20 present is moved forward along the direction of feed A so that it is inserted between the top of the pile 4 and each wedge-shaped element 8, 9 already in position.

Preferably, during the forward stoke the cylinder 27 connected to the supporting plate 22 is activated to angle the arm 21 (with predetermined stroke) and avoid interference with the respective wedge-shaped element 8 or 9.

At this point the cylinder 28 may also be activated to determine the compression force F to be applied to the top of the pile 4.

As it moves forward, the crossbar 5 also causes the set or sets of presser equipment 20 to move forwards which, thanks to the cylindrical roller 24, maintains pressure on the first panels 3 at the top of the pile 4 along the feed path.

Just before the crossbar 5 reaches the forward limit position for placing the stack 2 in the user station, the cylinder 28 raises the arm 21 to avoid unwanted contact with the above-mentioned reference stop elements 60.

Therefore, an apparatus with the structure described fulfils the preset aims thanks to the presence of presser elements, which are fixed or can move with the crossbar and are designed to allow guaranteed, precise feed of the panels selected.

This is all accomplished without excessively altering the structure of the crossbar and operation of the crossbar and the selector unit.

The invention described above is susceptible of industrial application and may be modified and adapted in several ways without thereby departing from the scope of the invention as defined by the claims.

## Claims

1. An apparatus for forming stacks (2) of panels (3) from a vertical pile (4) of panels (3) and feeding said stacks (2) to a user station, said apparatus (1) comprising at least:
- a crossbar (5) mobile in a feed direction (A), above the pile (4) of panels (3), to and from at least between two limits respectively corresponding to a position where the stack (2) is selected and formed and a position where the stack (2) is placed in the user station;
- at least one selector unit (6) mounted on the crossbar (5) and designed to separate a certain number of panels (3) from the top of the pile (4) to form the stack (2), thus creating a gap (S) by a relative movement between the pile (4) and the selector unit (6) in a vertical direction (V), the selector unit (6) comprising a stop element (7) that references the top of the pile (4) and a first wedge shaped element (8) which can move transversally to the pile (4) in the crossbar (5) direction of feed (A) and is designed to be inserted in the pile (4);
the apparatus also comprising presser elements (10) which can be inserted between the top of the pile (4) and the selected stack (2), and acting on the top of the pile (4) after the gap (S) has been created, thus generating a compression force (F) on the pile (4) to hold the panels (3) at the top of the pile (4) during stack (2) feed by the crossbar (5);
the apparatus being **characterized in that** the presser elements (10) are connected to the crossbar (5) and can move, independently of the crossbar (5), at least parallel with the first wedge-shaped element (8) along the direction of feed (A).

2. The apparatus according to claim 1, **characterized in that** the selector unit comprises a second wedge-shaped element (9) mounted on the crossbar (5) and able to move, respectively, in the direction of feed (A) and relative to the crossbar (5) along a first horizontal direction (T), longitudinally to the crossbar (5).

3. The apparatus according to one of foregoing claims, **characterised in that** each presser element (10) comprises at least one set of equipment (20) connected to the crossbar (5) and positioned parallel alongside the first and/or second wedge-shaped element (8, 9); each set of equipment (20) comprising at least:
- an arm (21) pivoting, at (21a) and at a first, distal end, at a supporting plate (22) slidably connected to a guide (23) which is integral with the crossbar (5); the distal end of the arm (21) having a head (24) for making contact with and pressing on the top of the pile (4);
- a movement unit (25) acting on the plate (22) and on the arm (21), allowing the contact head (24) to be inserted between the first and/or second wedge-shaped element (8, 9) and the top of the pile (4) in coordination with the creation of a gap (S) between a stack (2) of panels (3) and the rest of the pile (4).

4. The apparatus according to claim 3, **characterised in that** the movement unit (25) comprises third movement means (26) which are inserted between the crossbar (5) and the supporting plate (22) and are designed to allow a movement of the plate (22), in the direction of feed (A), between a back, non-operating position, and a forward, operating position in which the plate is inserted between the first and/or second wedge-shaped element (8, 9) and the top of the pile (4), and in which the arm (21) is parallel with the first and/or second wedge-shaped element (8, 9).

5. The apparatus according to claims 3 and 4, **characterised in that** the movement unit (25) comprises fourth movement means (27, 28) which are inserted between the plate (22) and an intermediate point (21b) of the arm (21), and which are designed to allow, respectively, a first movement towards the top of the pile (4), when the plate (22) is in the forward, operating position, and a second movement for contact between the head (24) and the top of the pile (4) with pressure being applied to the top of the pile.

6. The apparatus according to claim 3, **characterised in that** the contact head consists of an idle cylindrical roller (24) connected at the proximal end of the arm (21).

7. The apparatus according to claim 5, **characterised in that** the fourth movement means comprise two opposite cylinders (27, 28), positioned vertically and connected with the respective rod to the plate (22) and to the arm (21) so as to control the arm (21) in the approach position and, respectively in the position for contact with and pressing on the top of the pile (4), and vice versa.

8. An apparatus for forming stacks (2) of panels (3) from a vertical pile (4) of panels (3) and feeding said stacks (2) to a user station, said apparatus (1) comprising at least:
- a crossbar (5) mobile in a feed direction (A), above the pile (4) of panels (3), to and from at least between two limits respectively corresponding to a position where the stack (2) is selected and formed and a position where the stack (2) is placed in the user station;
- at least one selector unit (6) mounted on the crossbar (5) and designed to separate a certain number of panels (3) from the top of the pile (4) to form the stack (2), thus creating a gap (S) by a relative movement between the pile (4) and the selector unit (6) in a vertical direction (V);
- presser elements (10) which can be inserted between the top of the pile (4) and the selected stack (2), and acting on the top of the pile (4) after the gap (S) has been created, thus generating a compression force (F) on the pile (4) to hold the panels (3) at the top of the pile (4) during stack (2) feed by the crossbar (5);
the presser elements (10) being connected to the a supporting fixed surface (12) and positioned close to the end of the pile (4) furthest from the user station, relative to the direction of feed (A), and below the crossbar (5) and the selector unit (6), the pile (4) resting on a horizontal elevator table (11) able to move vertically in both directions relative to said fixed surface (12);
the presser elements (10) comprising a compression plate (13) connected to first movement means (14) positioned along a supporting column (15) and designed to allow the plate (13) to move between two limit positions, respectively, a lowered operating position in contact with and pressing on the top of the pile (4), and a raised non-operating position in which the plate (13) is spaced from the top of the pile (4),
the apparatus being **characterized in that** the column (15) pivots, at its lower end, at the fixed surface (12) and **in that** it is controlled by second movement means (16) designed to allow column (15) rotation between a lowered non-operating position, in which the column (15) is spaced from the pile (4), and a raised operating position, in which the column (15) is positioned parallel with the pile (4) and the plate (13) is inserted between the top of the pile (4) and the selector unit (6).

9. The apparatus according to claim 8, **characterised in that** the plate (13) comprises an operating contact head (17) positioned transversally to the column (15), and a support (18) parallel with the column (15), slidably connected to respective column (15) guides (19); the lower end of the support (18) being connected to the rod of a movement cylinder (14), integral with the column (15), and forming the first movement means.

## Patentansprüche

1. Vorrichtung zur Bildung von Stapeln (2) von Platten (3) aus einem vertikalen Stoß (4) von Platten (3) und Zuführung dieser Stapel (2) zu einer Benutzerstation, wobei die Vorrichtung (1) mindestens Folgendes umfasst:
- einen Querträger (5), der in einer Zuführungsrichtung (A) oberhalb des Stoßes (4) von Platten (3) von und zu mindestens zwischen zwei Grenzen mobil ist, die jeweils einer Position entsprechen, in der der Stapel (2) ausgewählt und gebildet wird, und einer Position, in der der Stapel (2) in der Benutzerstation platziert wird;
- mindestens eine Sortiereinheit (6), montiert auf dem Querträger (5) und ausgestaltet, um eine bestimmte Zahl an Platten (3) von der Oberseite des Stoßes (4) zu trennen, um den Stapel (2) zu bilden, wodurch eine Lücke (S) durch eine entsprechende Bewegung zwischen dem Stoß (4) und der Sortiereinheit (6) in einer vertikalen Richtung (V) geschaffen wird, wobei die Sortiereinheit (6) ein Stoppelement (7) umfasst, das die Oberseite des Stoßes (4) markiert, und ein erstes keilförmiges Element (8), das sich quer zum Stoß (4) in die Zuführungsrichtung (A) des Querträgers (5) bewegen kann und ausgestaltet ist, um in den Stoß (4) eingesetzt zu werden;
wobei die Vorrichtung auch Andrückelemente (10) umfasst, die zwischen der Oberseite des Stoßes (4) und dem ausgewählten Stapel (2) eingefügt werden können und auf die Oberseite des Stoßes (4) wirken, nachdem die Lücke (S) geschaffen wurde, wodurch eine Druckkraft (F) auf den Stoß (4) erzeugt wird, um die Platten (3) an der Oberseite des Stoßes (4) beizubehalten, während der Stapel (2) vom Querträger (5) zugeführt wird;
wobei die Vorrichtung **dadurch gekennzeichnet ist, dass** die Andrückelemente (10) mit dem Querträger (5) verbunden sind und sich unabhängig vom Querträger (5) mindestens parallel mit dem ersten keilförmigen Element (8) längs der Zuführungsrichtung (A) bewegen können.

2. Vorrichtung nach Anspruch 1, **dadurch gekennzeichnet, dass** die Sortiereinheit ein zweites keilförmiges Element (9) umfasst, das auf dem Querträger (5) montiert und in der Lage ist, sich jeweils in die Zuführungsrichtung (A) und relativ zum Querträger (5) längs einer ersten horizontalen Richtung (T) längsseitig zum Querträger (5) zu bewegen.

3. Vorrichtung nach einem der vorhergehenden Ansprüche, **dadurch gekennzeichnet, dass** ein jedes Andrückelement (10) mindestens einen Satz Ausrüstungen (20) umfasst, verbunden mit dem Querträger (5) und positioniert parallel entlang des ersten und/oder zweiten keilförmigen Elements (8, 9), wobei ein jeder Satz Ausrüstungen (20) mindestens umfasst:
- einen Arm (21), schwenkend an (21a) und an einem ersten distalen Ende an einer Halteplatte (22), verschiebbar verbunden mit einer Führung (23), die fest mit dem Querträger (5) verbunden ist, wobei das distale Ende des Arms (21) einen Kopf (24) aufweist, um einen Kontakt mit der Oberseite des Stoßes (4) herzustellen und auf diese zu drücken;
- eine Bewegungseinheit (25), die auf die Platte (22) und auf den Arm (21) wirkt und dem Kontaktkopf (24) erlaubt, zwischen dem ersten und/oder dem zweiten keilförmigen Element (8, 9) und der Oberseite des Stoßes (4) in Koordination mit der Schaffung einer Lücke (S) zwischen einem Stapel (2) an Platten (3) und dem Rest des Stoßes (4) eingefügt zu werden.

4. Vorrichtung nach Anspruch 3, **dadurch gekennzeichnet, dass** die Bewegungseinheit (25) dritte Bewegungsmittel (26) umfasst, die zwischen dem Querträger (5) und der Halteplatte (22) eingefügt und ausgestaltet sind, um eine Bewegung der Platte (22) in Zuführungsrichtung (A) zwischen einer rückwärtigen Nichtbetriebsposition und einer Vorwärtsbetriebsposition zu erlauben, in der die Platte zwischen dem ersten und/oder dem zweiten keilförmigen Element (8, 9) und der Oberseite des Stoßes (4) eingefügt ist und in der der Arm (21) parallel zum ersten und/oder zweiten keilförmigen Element (8, 9) angeordnet ist.

5. Vorrichtung nach Anspruch 3 und 4, **dadurch gekennzeichnet, dass** die Bewegungseinheit (25) vierte Bewegungsmittel (27, 28) umfasst, die zwischen der Platte (22) und einem Zwischenpunkt (21b) des Arms (21) eingefügt sind und die ausgestaltet sind, um jeweils eine erste Bewegung zur Oberseite des Stoßes (4) zu erlauben, wenn sich die Platte (22) in der Vorwärtsbetriebsposition befindet, und einer zweiten Bewegung für den Kontakt zwischen dem Kopf (24) und der Oberseite des Stoßes (4), wobei Druck auf die Oberseite des Stoßes angewandt wird.

6. Vorrichtung nach Anspruch 3, **dadurch gekennzeichnet, dass** der Kontaktkopf aus einer frei laufenden Zylinderwalze (24) besteht, die mit dem proximalen Ende des Arms (21) verbunden ist.

7. Vorrichtung nach Anspruch 5, **dadurch gekennzeichnet, dass** die vierten Bewegungsmittel zwei gegenständige Zylinder (27, 28) umfassen, die vertikal positioniert und mit der jeweiligen Stange mit der Platte (22) und dem Arm (21) verbunden sind, sodass der Arm (21) in der Annäherungsposition gesteuert wird und jeweils in der Position für den Kontakt mit der Oberseite des Stoßes (4) und deren Andrücken und umgekehrt.

8. Vorrichtung zur Bildung von Stapeln (2) von Platten (3) aus einem vertikalen Stoß (4) von Platten (3) und Zuführung dieser Stapel (2) zu einer Benutzerstation, wobei die Vorrichtung (1) mindestens Folgendes umfasst:
- einen Querträger (5), der in einer Zuführungsrichtung (A) oberhalb des Stoßes (4) von Platten (3) von und zu mindestens zwischen zwei Grenzen mobil ist, die jeweils einer Position entsprechen, in der der Stapel (2) ausgewählt und gebildet wird, und einer Position, in der der Stapel (2) in der Benutzerstation platziert wird;
- mindestens eine Sortiereinheit (6), montiert auf dem Querträger (5) und ausgestaltet, um eine bestimmte Zahl an Platten (3) von der Oberseite des Stoßes (4) zu trennen, um den Stapel (2) zu bilden, wodurch eine Lücke (S) durch eine entsprechende Bewegung zwischen dem Stoß (4) und der Sortiereinheit (6) in einer vertikalen Richtung (V) geschaffen wird;
- Andrückelemente (10), die zwischen der Oberseite des Stoßes (4) und dem ausgewählten Stapel (2) eingefügt werden können und auf die Oberseite des Stoßes (4) wirken, nachdem die Lücke (S) geschaffen wurde, wodurch eine Druckkraft (F) auf den Stoß (4) erzeugt wird, um die Platten (3) an der Oberseite des Stoßes (4) beizubehalten, während der Stapel (2) vom Querträger (5) zugeführt wird;
wobei die Andrückelemente (10) mit einer ortsfesten Halteoberfläche (12) verbunden und nah am Ende des Stoßes (4) positioniert sind, am weitesten entfernt von der Benutzerstation, relativ zur Zuführungsrichtung (A) und unterhalb des Querträgers (5) und der Sortiereinheit (6), wobei der Stoß (4) auf einem waagerechten Hebetisch (11) ruht, der in der Lage ist, sich vertikal in beide Richtungen relativ zur ortsfesten Oberfläche (12) zu bewegen;
wobei die Andrückelemente (10) eine Kompressionsplatte (13) umfassen, die mit den ersten Bewegungsmitteln (14) verbunden ist, positioniert entlang einer Haltesäule (15) und ausgestaltet, um der Platte (13) zu erlauben sich zwischen zwei Grenzpositionen zu bewegen, jeweils einer abgesenkten Betriebsposition in Kontakt mit der und drückend auf die Oberseite des Stoßes (4) und einer angehobenen Nichtbetriebsposition, in der die Platte (13) von der Oberseite des Stoßes (4) beabstandet ist, wobei die Vorrichtung **dadurch gekennzeichnet ist, dass** die Säule (15) an ihren unteren Enten an der ortsfesten Oberfläche (12) geschwenkt und von zweiten Bewegungsmitteln (16) gesteuert wird, ausgestaltet, um die Rotation der Säule (15) zwischen einer abgesenkten Nichtbetriebsposition, in der die Säule (15) vom Stoß (4) beabstandet ist, und einer angehobenen Betriebsposition, in der die Säule (15) parallel zum Stapel (4) positioniert ist und die Platte (13) zwischen der Oberseite des Stoßes (4) und der Sortiereinheit (6) eingefügt wird, zu erlauben.

9. Vorrichtung nach Anspruch 8, **dadurch gekennzeichnet, dass** die Platte (13) einen Betriebskontaktkopf (17) umfasst, der quer zur Säule (15) positioniert ist und eine Halterung (18), die parallel zur Säule (15) angeordnet ist, verschiebbar verbunden mit den jeweiligen Führungen (19) der Säule (15), wobei das untere Ende der Halterung (18) mit der Stange eines Bewegungszylinders (14) verbunden ist, fest verbunden mit der Säule (15) und bildend die ersten Bewegungsmittel.

## Revendications

1. Appareil pour former des empilements (2) de panneaux (3) à partir d'un tas vertical (4) de panneaux (3) et délivrer lesdits empilements (2) à un poste d'utilisateur, ledit appareil (1) comprenant au moins :
- une traverse (5) mobile dans une direction d'alimentation (A), au-dessus du tas (4) de panneaux (3), alternativement au moins entre deux positions extrêmes correspondant respectivement à une position où l'empilement (2) est sélectionné et formé et une position où l'empilement (2) est placé dans le poste d'utilisateur ;
- au moins un dispositif sélecteur (6) monté sur la traverse (5) et conçu pour séparer un certain nombre de panneaux (3) du sommet du tas (4) pour former l'empilement (2), créant ainsi un espace (S) par un mouvement relatif entre le tas (4) et le dispositif sélecteur (6) dans une direction verticale (V), le dispositif sélecteur (6) comprenant un élément de butée (7) qui fait référence au sommet du tas (4) et un premier élément en forme de coin (8) pouvant se déplacer transversalement par rapport au tas (4) dans la direction de la traverse (5) d'alimentation (A) et est conçu pour être inséré dans le tas (4) ;
l'appareil comprenant aussi des éléments presseurs (10) pouvant être insérés entre le sommet du tas (4) et l'empilement sélectionné (2), et agissant sur le sommet du tas (4) après que l'espace (S) ait été créé, générant ainsi une force de compression (F) sur le tas (4) pour maintenir les panneaux (3) au sommet du tas (4) lors de l'alimentation de l'empilement (2) par la traverse (5) ;
l'appareil étant **caractérisé en ce que** les éléments presseurs (10) sont reliés à la traverse (5) et peuvent se déplacer, indépendamment de la traverse (5), au moins de façon parallèle au premier élément en forme de coin (8) le long de la direction d'alimentation (A).

2. Appareil selon la revendication 1, **caractérisé en ce que** le dispositif sélecteur comprend un second élément en forme de coin (9) monté sur la traverse (5) et pouvant se délacer, respectivement, dans la direction d'alimentation (A) et par rapport à la traverse (5) le long d'une première direction horizontale (T), longitudinalement par rapport à la traverse (5).

3. Appareil selon l'une des revendications précédentes, **caractérisé en ce que** chaque élément presseur (10) comprend au moins un ensemble d'équipement (20) relié à la traverse (5) et positionné de façon parallèle le long du premier et/ou du deuxième élément en forme de coin (8, 9) ; chaque ensemble d'équipement (20) comprenant au moins :
- un bras (21) pivotant, en (21a) et au niveau d'une première extrémité distale, en correspondance d'une plaque de support (22) reliée de façon coulissante à un guide (23) qui est solidaire de la traverse (5) ; l'extrémité distale du bras (21) ayant une tête (24) pour entrer en contact avec, et presser le sommet du tas (4) ;
- une unité de déplacement (25) agissant sur la plaque (22) et sur le bras (21), permettant à la tête de contact (24) d'être insérée entre le premier et/ou le deuxième élément en forme de coin (8, 9) et le sommet du tas (4) en coordination avec la création d'un espace (S) entre un empilement (2) de panneaux (3) et le reste du tas (4).

4. Appareil selon la revendication 3, **caractérisé en ce que** l'unité de déplacement (25) comprend des troisièmes moyens de déplacement (26) qui sont insérés entre la traverse (5) et la plaque de support (22) et sont conçus pour permettre un déplacement de la plaque (22), dans la direction d'alimentation (A), entre une position non fonctionnelle arrière et une position fonctionnelle avant dans laquelle la plaque est insérée entre le premier et/ou le deuxième élément en forme de coin (8, 9) et le sommet du tas (4), et dans laquelle le bras (21) est parallèle au premier et/ou deuxième élément en forme de coin (8, 9).

5. Appareil selon les revendications 3 et 4, **caractérisé en ce que** l'unité de déplacement (25) comprend des quatrièmes moyens de déplacement (27, 28) qui sont insérés entre la plaque (22) et un point intermédiaire (21b) du bras (21), et qui sont conçus pour permettre, respectivement, un premier déplacement vers le sommet du tas (4) lorsque la plaque (22) se trouve dans la position fonctionnelle avant, et un deuxième déplacement de contact entre la tête (24) et le sommet du tas (4) avec la pression étant appliquée au sommet du tas.

6. Appareil selon la revendication 3, **caractérisé en ce que** la tête de contact consiste en un rouleau cylindrique libre (24) relié à l'extrémité proximale du bras (21).

7. Appareil selon la revendication 5, **caractérisé en ce que** les quatrièmes moyens de déplacement comprennent deux cylindres opposés (27, 28), positionnés verticalement et reliés avec la tige respective à la plaque (22) et au bras (21) de manière à commander le bras (21) dans la position d'approche et, respectivement dans la position de contact avec le, et de pressage du sommet du tas (4), et vice versa.

8. Appareil pour former des empilements (2) de panneaux (3) à partir d'un tas vertical (4) de panneaux (3) et délivrer lesdits empilements (2) à un poste d'utilisateur, ledit appareil (1) comprenant au moins :
- une traverse (5) mobile dans une direction d'alimentation (A), au-dessus du tas (4) de panneaux (3), alternativement au moins entre deux positions extrêmes correspondant respectivement à une position où l'empilement (2) est sélectionné et formé et une position où l'empilement (2) est placé dans le poste d'utilisateur ;
- au moins un dispositif sélecteur (6) monté sur la traverse (5) et conçu pour séparer un certain nombre de panneaux (3) du sommet du tas (4) pour former l'empilement (2), créant ainsi un espace (S) par un mouvement relatif entre le tas (4) et le dispositif sélecteur (6) dans une direction verticale (V) ;
- des éléments presseurs (10) pouvant être insérés entre le sommet du tas (4) et l'empilement sélectionné (2), et agissant sur le sommet du tas (4) après que l'espace (S) ait été créé, générant ainsi une force de compression (F) sur le tas (4) pour maintenir les panneaux (3) au sommet du tas (4) lors de l'alimentation de l'empilement (2) par la traverse (5) ;
les éléments presseurs (10) étant reliés à une surface fixe de support (12) et positionnés à proximité de l'extrémité du tas (4) la plus éloignée du poste d'utilisateur, par rapport à la direction d'alimentation (A), et en dessous de la traverse (5) et du dispositif sélecteur (6), le tas (4) restant sur une table élévatrice horizontale (11) pouvant se déplacer verticalement dans les deux directions par rapport à ladite surface fixe (12) ;
les éléments presseurs (10) comprenant une plaque de compression (13) reliée aux premiers moyens de déplacement (14) positionnés le long d'une colonne de support (15) et conçus pour permettre à la plaque (13) de se déplacer entre deux positions extrêmes, respectivement, une position fonctionnelle abaissée en contact et pressant le sommet du tas (4), et une position non fonctionnelle relevée dans laquelle la plaque (13) est espacée du sommet du tas (4), l'appareil étant **caractérisé en ce que** la colonne (15) pivote au niveau de son extrémité inférieure, au niveau de la surface fixe (12) et **en ce qu'**elle est commandée par des seconds moyens de déplacement (16) conçus pour permettre la rotation de la colonne (15) entre une position non fonctionnelle abaissée, dans laquelle la colonne (15) est éloignée du tas (4), et une position fonctionnelle relevée, dans laquelle la colonne (15) est positionnée parallèlement au tas (4) et la plaque (13) est insérée entre le sommet du tas (4) et le dispositif sélecteur (6).

9. Appareil selon la revendication 8, **caractérisé en ce que** la plaque (13) comprend une tête de contact fonctionnelle (17) positionnée transversalement par rapport à la colonne (15), et un support (18) parallèle à la colonne (15), relié de façon coulissante à des guides (19) de colonne (15) respectifs ; l'extrémité inférieure du support (18) étant reliée à la tige d'un cylindre de déplacement (14), solidaire de la colonne (15) et formant les premiers moyens de déplacement.
